# DEMANDE DE BREVET EUROPEEN

(11) **EP 0 955 718 A1**
(43) Date de publication de la demande: **10.11.1999**
(21) Numéro de dépôt: 99401123.7
(22) Date de dépôt: 07.05.1999
(51) Int. Cl.: H02M 1/00

(54) **Convertisseur de tension à découpage**

(30) Priorité: 07.05.1998 FR 9805837
(71) Demandeur: STMicroelectronics SA, 94250 Gentilly (FR)
(72) Inventeur: Le van Suu, Maurice, 75116 Paris (FR)
(74) Mandataire: Ballot, Paul Denis Jacques

(57) **Abrégé**

L'invention concerne un convertisseur de tension comportant un élément résonant (L-R3) ainsi qu'un interrupteur (SW) commandé par une unité de gestion (UC) de manière à régler la quantité d'énergie transférée du circuit primaire (BP) au circuit secondaire (BS) qui comporte des moyens pour générer la tension d'alimentation de l'unité de gestion à partir de la tension de sortie (V_{S}) et des moyens (R1,R2,Q1) pour maintenir l'interrupteur (SW) en position fermée au démarrage.

Avantage : aucun moyen d'alimentation particulier n'est nécessaire pour l'alimentation de l'unité de gestion.

## Description

La présente invention se rapporte à un perfectionnement aux convertisseurs de tension à découpage et à un convertisseur de tension l'incorporant, notamment un convertisseur continu/continu (DC/DC). Mais elle peut aussi s'appliquer à un convertisseur alternatif/continu (AC/DC), continu/alternatif (DC/AC), ou alternatif/alternatif (AC/AC), moyennant les aménagements nécessaires.

Un convertisseur de tension DC/DC convertit une tension continue d'une première valeur en une tension continue d'une seconde valeur, supérieure ou inférieure à la première valeur.

En particulier, les convertisseurs à découpage présentent la particularité de limiter la consommation en courant à ce qui est nécessaire pour générer une tension de valeur souhaitée.

Un tel convertisseur comprend un élément résonant, un circuit primaire et un circuit secondaire, une source de tension délivrant une tension d'entrée continue qui est appliquée aux bornes du circuit primaire, ainsi qu'un interrupteur dont la fonction est de commuter le courant dans l'élément résonant à une fréquence déterminée. Plus précisément, l'interrupteur est commandé de manière à régler la quantité d'énergie transférée du circuit primaire au circuit secondaire à travers l'élément résonant en sorte que la valeur de la tension de sortie délivrée aux bornes du circuit secondaire est liée à la valeur de la tension d'entrée par un rapport de transformation déterminé.

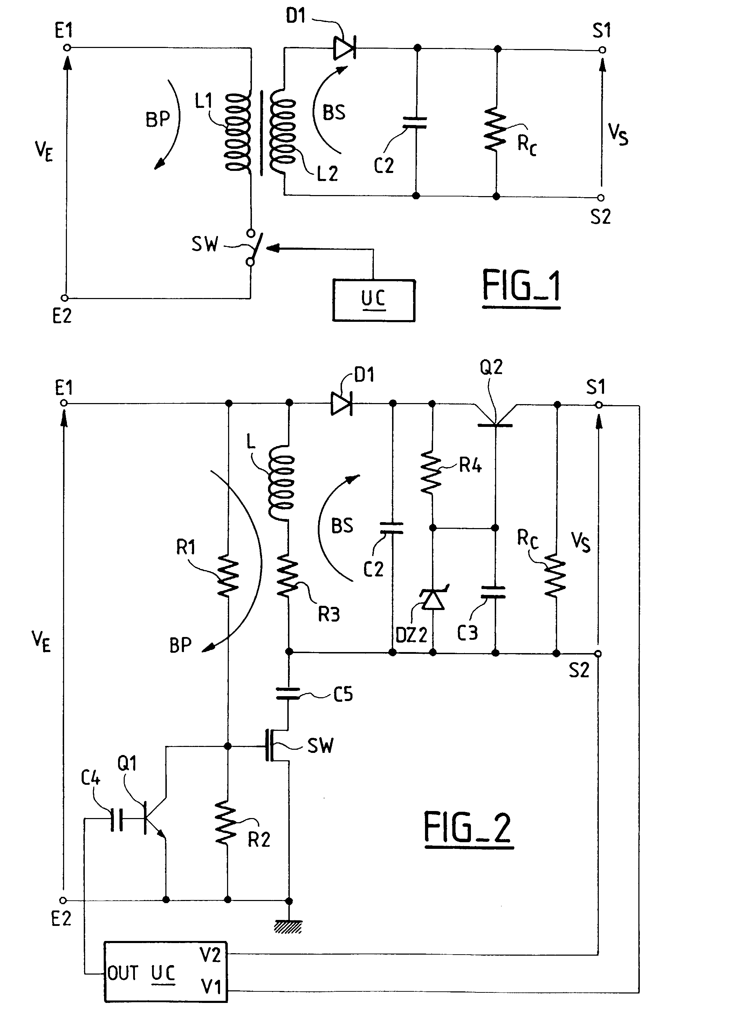

A la figure 1 , on a représenté un exemple de convertisseur DC/DC selon l'état de la technique. Il s'agit en l'occurrence d'un convertisseur connu sous le nom de convertisseur de type "BUCK".

Un tel convertisseur comporte un transformateur, formant élément résonant. Le transformateur comporte un enroulement primaire L1 disposé en série avec un interrupteur SW entre deux bornes d'entrée respectivement E1 et E2. Il comporte également un enroulement secondaire L2 dont une première extrémité est reliée, à travers une diode D1, à une première borne de sortie S1 du convertisseur. La cathode de la diode D1 est connectée à la borne S1. La seconde extrémité de l'enroulement L2 est reliée à une seconde borne de sortie S2 du convertisseur.

Le circuit primaire du convertisseur est constitué par la boucle BP (au sens des lois de Kirchoff) comprenant l'enroulement primaire L1 et l'interrupteur SW ainsi que la branche (au sens des lois de Kirchoff) entre les bornes d'entrées E1 et E2 du convertisseur. Une source de tension non représentée délivre une tension d'entrée continue V_{E} entre les bornes E1 et E2. Le circuit secondaire est constitué par une boucle BS comprenant l'enroulement secondaire L2, la diode D1, ainsi que les branches reliées entre les bornes de sorties S1 et S2. Une telle branche comporte un condensateur d'accumulation C2. Le condensateur C2 et l'enroulement secondaire L2 forment un circuit résonant. Une autre branche de ce type comporte la charge, ici symbolisée par une résistance R_{C} connectée en parallèle sur le condensateur d'accumulation C2, entre les bornes S1 et S2.

La tension de sortie V_{S} délivrée aux bornes du condensateur C2 et appliquée à la charge R_{C} est liée à la tension d'entrée V_{E} par la relation V_{S}=k*V_{E}, où k est le rapport de conversion du convertisseur.

Les cycles d'ouverture et de fermeture de l'interrupteur SW sont commandés par une unité de gestion UC. L'enroulement secondaire L2 stocke de l'énergie pendant les cycles de fermeture et la restitue, via la diode D1, au condensateur C2 pendant les cycles d'ouverture. La circulation d'un courant de charge à travers la charge R_{C} tend à décharger le condensateur d'accumulation C2.

Dit autrement, les cycles d'ouverture et de fermeture de l'interrupteur SW découpent la tension d'entrée V_{E} à une fréquence déterminée dite fréquence de découpage ou de hâchage. La source de tension délivrant la tension V_{E} ne débite du courant que lorsque l'interrupteur SW est fermé. Le rendement d'un tel convertisseur est donc très bon.

L'unité de gestion UC délivre en général un signal modulé en largeur d'impulsion pour commander l'interrupteur SW. Le temps de fermeture de l'interrupteur SW par unité de temps (ou rapport cyclique), imposé par l'unité de gestion UC, détermine la valeur du rapport de conversion k.

L'unité de gestion peut être un microcontrôleur ou un dispositif analogue. Un tel dispositif nécessite, pour son fonctionnement, des moyens d'alimentation produisant une basse tension d'alimentation, par exemple 5 volts.

Ces moyens d'alimentation comprennent une source de tension distincte de celle délivrant la tension d'entrée V_{E}. Tout circuit incluant un tel convertisseur doit donc comporter deux sources d'alimentation, à savoir une première source générant la tension d'entrée V_{E} et une seconde source générant la tension d'alimentation de l'unité de gestion UC. Cette contrainte pénalise fortement le coût de fabrication et la taille de circuits électroniques simples incluant un tel convertisseur.

On connaît certes des moyens générant une tension d'alimentation continue de 5 volts à partir de la tension d'entrée V_{E}. Cependant, il est nécessaire de compenser les variations de V_{E} si cette tension n'est pas rigoureusement constante. Dit autrement, il faut une régulation de la valeur de la tension générée. Ces moyens sont donc complexes. En outre, si la valeur de V_{E} est très supérieure à la valeur de la tension d'alimentation de l'unité de gestion UC, ces moyens peuvent avoir un mauvais rendement. Par exemple si la tension d'alimentation de l'unité de gestion UC est générée à partir de V_{E} par chute de tension aux bornes d'un élément résistif, un échauffement important est produit par effet Joule dans cet élément.

La présente invention vise à pallier l'inconvénient précité de l'état antérieur de la technique.

A cet effet, l'invention propose un convertisseur du type mentionné en introduction qui comporte des moyens pour générer la tension d'alimentation de l'unité de gestion à partir de la tension de sortie du convertisseur et des moyens pour maintenir l'interrupteur en position fermée au démarrage en sorte qu'une tension est disponible aux bornes du circuit secondaire et est utilisée pour alimenter l'unité de gestion au démarrage.

L'invention propose donc de générer la tension d'alimentation de l'unité de gestion à partir de la tension de sortie du convertisseur, et propose des moyens pour pallier le défaut de fonctionnement du convertisseur au démarrage, c'est à dire le fait que la tension de sortie n'est pas établie puisque l'unité de gestion ne peut fonctionner sans tension d'alimentation.

Par l'expression "au démarrage" employée ci-dessus, on entend une courte phase de fonctionnement qui suit la mise sous tension du convertisseur, c'est-à-dire aussi l'application de la tension d'entrée V_{E} aux bornes du circuit primaire.

Grâce aux moyens de l'invention, l'unité de gestion est alimentée par une tension constituée par ou générée à partir de la tension de sortie du convertisseur. L'invention permet donc de faire l'économie d'une source d'alimentation spécifique pour l'alimentation de l'unité de gestion. En outre, les moyens de régulation de la tension d'alimentation de l'unité de gestion qui est générée sont les moyens de régulation de la tension de sortie du convertisseur. Aucun moyen de régulation supplémentaire n'a donc besoin d'être ajouté.

Selon une caractéristique de l'invention, l'élément résonant comporte une inductance de choc au lieu d'un transformateur. Ceci permet, avec le même convertisseur d'avoir une dynamique de la tension d'entrée très large, pour une même tension de sortie. Avec un transformateur en effet, la dynamique d'entrée est limitée par le rapport de transformation du transformateur qui est fixe (défini par le rapport du nombre de spires de l'enroulement secondaire sur le nombre de spires de l'enroulement primaire).

D'autres caractéristiques et avantages de l'invention apparaîtront encore à la lecture de la description qui va suivre. Celle-ci est purement illustratrive et doit être lue en regard des dessins annexés sur lesquels on a représenté :
- à la figure 1, déjà analysée : le schéma d'un convertisseur de tension DC/DC selon l'art antérieur;
- à la figure 2: le schéma d'un mode de réalisation d'un convertisseur de tension selon l'invention;
- à la figure 3: un graphique montrant l'allure, au démarrage, de la tension aux bornes du condensateur d'accumulation, de la tension de sortie du convertisseur, et du signal de commande de l'interrupteur;
- aux figures 4a à 4d: des convertisseurs respectivement DC/DC, AC/DC, DC/AC et AC/AC, comprenant un convertisseur de tension selon l'invention.

A la figure 2, sur laquelle les mêmes éléments qu'à la figure 1 portent les mêmes références, on a représenté le schéma d'un mode de réalisation possible d'un convertisseur selon l'invention. Dans ce mode de réalisation, le convertisseur est un convertisseur de type "BUCK".

La tension d'entrée V_{E} est appliquée entre les bornes d'entrée E1 et E2 du circuit primaire du convertisseur. Dans un exemple, le noeud E2 est connecté à la masse.

L'élément résonant comprend ici une inductance de choc L. De préférence, cette inductance est en série avec une résistance R3. L'élément résonant L-R3 est connecté en série avec l'interrupteur SW entre les entrées E1 et E2. Il est également connecté entre l'anode de la diode D1 et la borne de sortie S2 du convertisseur. Dit autrement l'élément résonant L-R3 appartient à la fois au circuit primaire (boucle BP) et au circuit secondaire (boucle BS).

L'interrupteur SW est préférentiellement un transistor MOS de puissance. Avantageusement, un condensateur C5 est connecté entre l'élément résonant L-R3 et le drain du transistor SW.

L'élément résonant L-R3 et le condensateur d'accumulation C2 forment un circuit résonant.

L'inductance L stocke de l'énergie pendant les cycles de fermeture de l'interrupteur SW et la restitue, via la diode D1, au condensateur C2 pendant les phases d'ouverture.

En outre, le condensateur C2 se charge aussi à travers la diode D1 à partir de la tension d'entrée V_{E} pendant les phases de fermeture.

De manière connue en soi, un transistor bipolaire Q1 est connecté en parallèle entre la grille de commande et la source du transistor SW. Plus précisément, le collecteur et l'émetteur du transistor Q1 sont respectivement connectés à la grille de commande et à la source du transistor SW. La base du transistor Q1 reçoit, éventuellement à travers un condensateur de découplage C4, un signal de commande CS délivré par une sortie OUT de l'unité de commande UC. Le transistor Q1 fonctionne en saturation. Il a pour fonction de court-circuiter la grille de commande et la source du transistor SW de manière à décharger rapidement la capacité grille/source de ce transistor à l'ouverture de l'interrupteur SW. De cette manière, la commutation du transistor SW à l'ouverture est plus rapide.

On notera que grâce aux moyens de l'invention qui vont maintenant être décrits plus en détail, aucune source de tension spécifique n'est nécessaire pour l'alimentation de l'unité de gestion UC.

Dans un exemple de réalisation particulièrement simple, l'unité de contrôle UC est alimentée par l'application entre deux de ses entrées, respectivement V1 et V2, de la tension de sortie V_{S} disponible entre les bornes de sortie du convertisseur, respectivement S1 et S2. Ceci est possible lorsque la tension V_{S} est égale à la tension d'alimentation de l'unité de gestion UC, à savoir 5 volts dans un exemple.

Le problème qui se pose alors est que, au démarrage, aucune tension de sortie n'est disponible entre les bornes S1 et S2. En conséquence, l'unité de gestion n'est pas alimentée et le convertisseur ne peut pas fonctionner.

C'est pourquoi l'invention propose des moyens pour maintenir l'interrupteur SW en position fermée au démarrage. Grâce à ces moyens, le transistor SW est maintenu à l'état passant pendant une certaine période de temps après la mise sous tension du convertisseur c'est-à-dire après l'application de la tension V_{E} entre les bornes E1 et E2.

Ces moyens comprennent par exemple un pont de résistances R1 et R2 connectées en série entre les bornes E1 et E2, le point milieu de ce pont étant relié à la grille de commande du transistor SW. Dit autrement, les résistances R1 et R2 assurent la polarisation du transistor SW au démarrage, en sorte que celui-ci est passant.

De cette manière, le condensateur d'accumulation C2 disposé au secondaire se charge progressivement à la valeur de V_{E} moins la tension de conduction de la diode D1, si bien qu'une tension positive est délivrée entre les bornes de sortie S1 et S2 avec une certaine constante de temps. Cette tension est écrêtée à la valeur de la tension V_{S} par des moyens d'écrêtage comprenant une diode Zéner, qui seront décrits plus loin.

Dans ces conditions, la tension générée par le convertisseur pendant la phase de démarrage permet la mise en route de l'unité de gestion UC, cette mise en route étant préalable à la génération du signal CS sur sa sortie OUT. Par mise en route de l'unité de gestion, on entend par exemple l'établissement d'une fréquence d'oscillation pour un signal d'horloge généré en interne par l'unité de gestion UC, ou encore l'initialisation d'un microcontrôleur si l'unité de gestion comprend un tel circuit.

Dès que l'unité de gestion est mise en route, le signal de commande CS est délivré sur la sortie OUT et la commutation de l'interrupteur SW est assurée par l'intermédiaire du transistor Q1. Le convertisseur peut alors fonctionner en mode normal, la phase de démarrage étant alors terminée.

On notera que selon une caractéristique avantageuse de l'invention, la résistance R2 du pont de polarisation R1-R2 est court-circuitée lorsque le transistor Q1 est conducteur si bien que le transistor SW est bloqué. Dit autrement, la résistance R2 est court-circuitée pendant les cycles d'ouverture de l'interrupteur SW. Le transistor Q1 a donc également pour fonction d'inhiber, en mode de fonctionnement normal, les moyens qui maintiennent l'interrupteur en position fermée pendant la phase de démarrage.

Comme on le voit, le schéma du convertisseur selon l'invention tel que représenté à la figure 2 est donc particulièrement simple puisque seules les résistances R1 et R2 ont été ajoutées pour maintenir l'interrupteur SW en position fermée au démarrage.

Dans un mode de réalisation avantageux, des moyens d'écrêtage ou moyens de régulation de la tension de sortie du convertisseur comprennent un transistor bipolaire Q2 connecté par son collecteur à la cathode de la diode D1, par son émetteur à la borne de sortie S1 du convertisseur, et par sa base à la borne de sortie S4 par l'intermédiaire d'un condensateur C3. En outre, une résistance R4 est connectée par une première borne à la cathode de la diode D1 et par une seconde borne à la cathode d'une diode Zéner DZ2 dont l'anode est par ailleurs reliée à la borne de sortie S2. La cathode de la diode DZ2 est en outre reliée à l'émetteur du transistor Q2.

La diode Zener DZ2 a pour fonction d'écrêter la tension de sortie V_{S} du convertisseur à une valeur maximum. Celle-ci est égale à la valeur de la tension Zener de la diode DZ2 plus la valeur de la tension base/émetteur du transistor Q2.

Selon un avantage de l'invention, les moyens de régulation de la valeur de la tension d'alimentation de l'unité de gestion UC qui est produite sont les moyens de régulation de la valeur de la tension de sortie V_{S} du convertisseur puisque la première de ces tensions est générée à partir de la seconde.

Le transistor Q2 a pour fonction d'augmenter la valeur du courant de sortie du convertisseur, c'est à dire la valeur du courant pouvant circuler dans la résistance de charge R_{C}. En l'absence du transistor Q2, la valeur du courant de sortie est limité à 20 mA (milliampères) à peu près, alors que en présence du transistor Q2, le courant de sortie peut atteindre 100 mA voire 150 mA.

On notera que le rôle de la résistance R3 est de limiter le courant dans l'inductance L.

En outre, la présence du condensateur C5 permet de diminuer la tension aux bornes du condensateur d'accumulation C2. Ceci permet d'utiliser un condensateur C2 ayant une tension de claquage moins élevée, c'est-à-dire un condensateur qui coûte moins cher. Ceci est particulièrement avantageux dans les applications où la tension d'entrée V_{E} est forte (220 volts par exemple).

A titre indicatif seulement, on donne ci-après la valeur des principaux composants passifs du circuit du convertisseur de tension représenté à la figure 2. La valeur de l'inductance L est par exemple 3,3 mH (millihenrys). La valeur du condensateur d'accumulation C2 est 220 µF (microfarads). Les résistances R1 et R2 valent 10 k_ (kiloohms) chacune. La résistance R3 vaut 100 _ (ohms) et la résistance R4 vaut 500 _. La valeur du condensateur C5 est 470 nF (nanofarads), celle du condensateur C4 est 10 µF et celle du condensteur C3 est 220 nF.

Le convertisseur décrit ci-dessus présente de bonnes propriétés de stabilité de la tension de sortie V_{S} pour une tension d'entrée pouvant varier entre 10 volts et 260 volts. La dynamique de la tension d'entrée V_{E} du convertisseur est donc grande, du fait de l'utilisation d'une inductance de choc et non d'un transformateur comme élément résonant.

Si la tension de sortie V_{S} est égale à la tension d'alimentation de l'unité de gestion UC, alors les bornes de sortie S1 et S2 du convertisseur peuvent respectivement être connectées aux entrées V1 et V2 de l'unité de gestion UC comme représenté à la figure 2. Néanmoins si la valeur de la tension V_{S} est supérieure à la valeur de la tension d'alimentation de l'unité de gestion UC, on pourra générer cette dernière à partir de la tension V_{S} au moyen d'un pont diviseur de tension.

Comme on l'aura compris, il est nécessaire que la valeur de la tension d'entrée V_{E} soit supérieure à la valeur de la tension d'alimentation de l'unité de gestion UC plus la valeur de la tension de conduction de la diode D1. Comme celle-ci peut être négligée, on dira qu'il est suffisant que V_{E} soit supérieure à la tension d'alimentation de l'unité de gestion UC, soit 5 volts dans l'exemple.

Le signal de commande CS généré par l'unité de gestion UC est un signal modulé en largeur d'impulsion à une fréquence de l'ordre de 20 kHz (kilohertzs).

La valeur du rapport cyclique de ce signal peut être adaptée de manière à tenir compte de la consommation de courant dans la charge. A cet effet, l'homme du métier sait que plus le rapport cyclique du signal CS augmente, c'est-à-dire plus le temps de conduction du transistor SW par unité de temps augmente, et plus la quantité d'énergie transférée du circuit primaire au circuit secondaire à travers l'élément résonant est importante.

A cet effet, on peut prévoir que l'unité de gestion UC comporte des moyens pour réaliser un asservissement de la tension de sortie V_{S} du convertisseur à une valeur fixe déterminée, par exemple après conversion analogique/numérique de la valeur de la tension V_{S} et traitement de cette valeur selon un algorithme adapté pour en déduire le rapport cyclique du signal de commande CS. Un tel algorithme peut par exemple être un algorithme de logique floue.

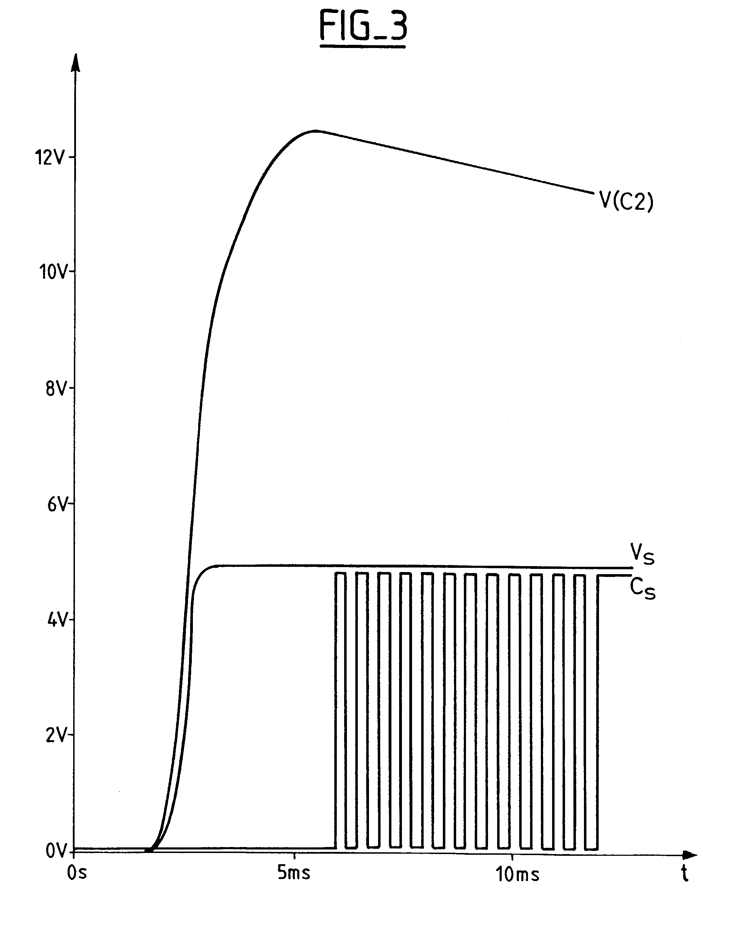

Le graphique de la figure 3 montre les courbes de la tension V(C2) aux bornes du condensateur d'accumulation C2, de la tension de sortie V_{S} du convertisseur de tension, et du signal de commande CS pendant la phase de démarrage et un peu au delà. La phase de démarrage dure quelques millisecondes, en fonction du rapport entre les tensions V_{E} et V_{S}, et en fonction du temps nécessaire à la mise en route de l'unité de gestion.

Les courbes de la figure 3 ont été produites à l'aide du logiciel de simulation "SPICE" pour une valeur de la tension d'entrée V_{E} continue égale à 12 volts et pour une valeur de la tension de sortie V_{S} continue égale à 5 volts.

La tension d'entrée V_{E} est appliquée entre les bornes E1 et E2 à l'instant initial. Au bout de 2 ms (millisecondes), la tension V(C2) aux bornes du condensateur C2 atteint à peu près 12 volts et la tension de sortie atteint une valeur régulée à 5 volts. Ce n'est que approximativement 4 ms plus tard, soit à peu près à 6 ms après l'instant initial que le signal de commande CS est délivré par l'unité de gestion sur sa sortie OUT. On peut donc dire que la phase de démarrage dure à peu près 6 ms.

L'invention a été décrite ci-dessus dans son application à un convertisseur de tension continu/continu (DC/DC) de type "BUCK". Néanmoins elle s'applique aussi à d'autres types de convertisseurs DC/DC, par exemple à un convertisseur de type "FLY-BACK".

L'élément résonant peut comprendre un transformateur avec un bobinage primaire, un bobinage secondaire et un noyau magnétique au lieu d'une simple inductance.

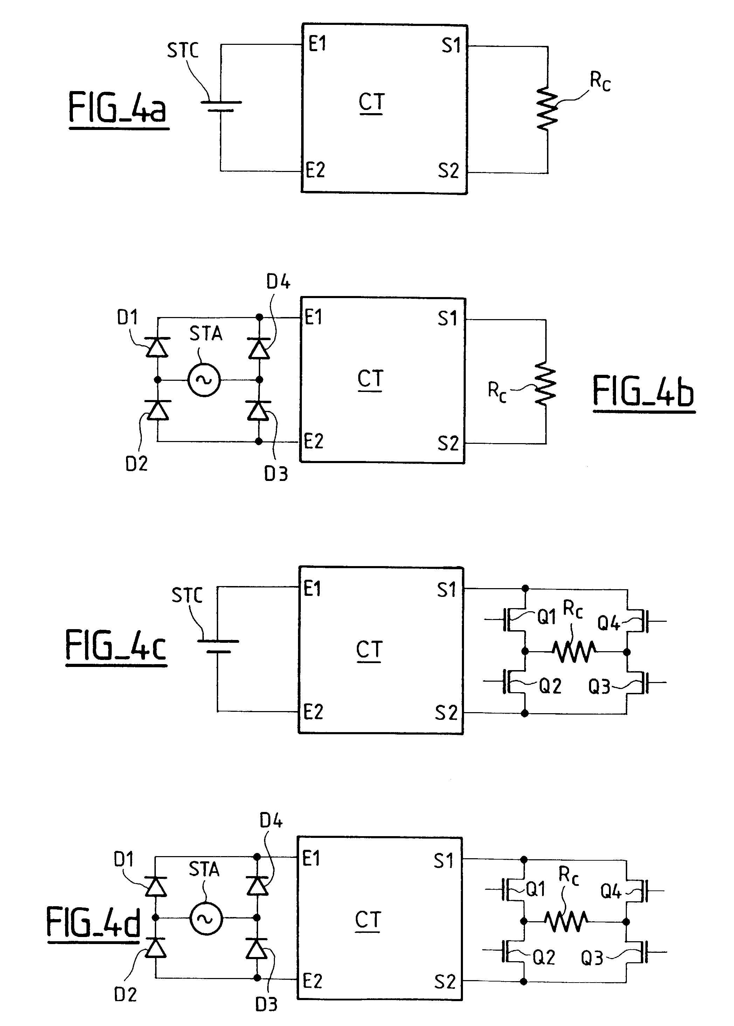

A la figure 4a, un convertisseur de tension continu/continu comprend un convertisseur de tension CT tel que celui représenté à la figure 2 dont on a isolé la charge R_{C}. La tension d'entrée V_{E} (continue) est délivrée par une source de tension continue STC.

L'invention peut aussi s'appliquer à des convertisseurs de tension alternatif/continu, continu/alternatif ou alternatif/alternatif.

L'homme du métier sait en effet se ramener au cas d'un convertisseur continu/continu considéré dans l'exemple de réalisation ci-dessus.

En effet, on peut facilement transformer une tension alternative en une tension continue à l'aide d'un circuit redresseur double alternance comprenant quatre diodes correctement connectées. Un tel circuit est communément appelé "pont redresseur". De même, on sait transformer une tension continue en une tension alternative à l'aide d'un circuit connu sous le nom de "pont en H", comportant quatre transistors correctement connectés et correctement commandés.

Ainsi, à la figure 4b, en convertisseur de tension alternatif/continu comprend un convertisseur de tension CT tel que décrit à la figure 2 précédé d'un pont redresseur double alternance comprenant quatre diodes D41 à D44. La tension d'entrée V_{E} (alternative) est délivrée par une source de tension alternative STA connectée dans le pont redresseur.

De même, à la figure 4c, un convertisseur de tension continu/alternatif comprend un convertisseur de tension CT tel que décrit à la figure 2 suivi d'un pont en H comprenant quatre transistors Q41 à Q44. La résistance de charge R_{C} est connectée dans le pont en H. Les transistors Q41 à Q44 sont par exemple des transistors MOS recevant des signaux de commande appropriés sur leurs grilles de commande respectives. De tels signaux peuvent par exemple être générés par l'unité de gestion UC. La tension d'entrée V_{E} (continue) est délivrée par une source continue STC.

De même encore, à la figure 4d, un convertisseur de tension alternatif/alternatif comprend un convertisseur de tension CT tel que décrit à la figure 2 précédé d'un pont redresseur identique à celui de la figure 4b et suivi d'un pont en H identique à celui de la figure 4c. La tension d'entrée V_{E} (alternative) est délivrée par une source de tension alternative STA connectée dans le pont redresseur. La charge R_{C} est connectée dans le pont en H.

## Revendications

1. Convertisseur de tension comportant un élément résonant (L-R3), un circuit primaire et un circuit secondaire, ainsi qu'un interrupteur (SW) commandé par une unité de gestion (UC) de manière à régler la quantité d'énergie transférée du circuit primaire au circuit secondaire à travers l'élément résonant en sorte que la valeur de la tension de sortie (V_{S}) délivrée aux bornes du circuit secondaire est liée à la valeur d'une tension d'entrée (V_{E}) appliquée aux bornes du circuit primaire par un rapport de transformation déterminé,
caractérisé en ce qu'il comporte des moyens pour générer la tension d'alimentation de l'unité de gestion à partir de la tension de sortie (V_{S}) et des moyens (R1,R2,Q1) pour maintenir l'interrupteur (SW) en position fermée au démarrage.

2. Convertisseur selon la revendication 1, caractérisé en ce que, l'interrupteur (SW) étant un transistor MOS de puissance, les moyens pour le maintenir en position fermée au démarrage comprennent un pont de résistances (R1,R2) connectées entre les bornes d'entrée (E1,E2) du convertisseur, le point milieu de ce pont étant relié à la grille de commande du transistor.

3. Convertisseur selon la revendication 1 ou 2, caractérisé en ce que l'élément résonant comporte une inductance de choc (L).

4. Convertisseur selon la revendication 3, caractérisé en ce que l'élément résonant comporte en outre une résistance (R3) en série avec l'inductance de choc (L).

5. Convertisseur selon la revendication 2, caractérisé en ce qu'il comporte un transistor bipolaire (Q1) connecté en parallèle entre la grille de commande et la source du transistor MOS de puissance (SW) et reçoit sur sa base un signal de commande (CS) délivré par l'unité de gestion (UC).

6. Convertisseur selon l'une des revendications 1 à 5, caractérisé en ce qu'il comporte un condensateur (C5) connecté entre l'élément résonant (L-R3) et l'interrupteur (SW).

7. Convertisseur selon l'une des revendications 1 à 6, caractérisé en ce que, la valeur de la tension de sortie (V_{S}) du convertisseur étant supérieure à celle de la tension d'alimentation de l'unité de gestion, celle-ci est générée à partir de la tension (V_{S}) de sortie du convertisseur à l'aide d'un pont diviseur de tension.

8. Convertisseur selon l'une des revendications 1 à 7, caractérisé en ce qu'il comporte des moyens pour réaliser un asservissement de la tension de sortie (V_{S}) du convertisseur à une valeur fixe déterminée.

9. Convertisseur selon la revendication 8, caractérisé en ce que les moyens pour réaliser un asservissement de la tension de sortie (V_{S}) du convertisseur à une valeur fixe déterminée comprennent un algorithme de logique floue.

10. Convertisseur de tension continu/continu caractérisé en ce qu'il comprend un convertisseur de tension selon l'une des revendications 1 à 9.

11. Convertisseur de tension alternatif/continu caractérisé en ce qu'il comprend un convertisseur de tension selon l'une des revendications 1 à 9 précédé d'un pont redresseur (D41-D44).

12. Convertisseur de tension continu/alternatif caractérisé en ce qu'il comprend un convertisseur selon l'une des revendications 1 à 9 suivi d'un pont en H (Q41-Q44).

13. Convertisseur de tension alternatif/alternatif caractérisé en ce qu'il comprend un convertisseur de tension selon l'une des revendications 1 à 9 précédé d'un pont redresseur (D41-D44) et suivi d'un pont en H (Q41-Q44).
